# EUROPÄISCHE PATENTSCHRIFT

(11) **EP 2 257 450 B1**
(45) Veröffentlichungstag und Bekanntmachung des Hinweises auf die Patenterteilung: **12.10.2011**
(21) Anmeldenummer: 09723732.5
(22) Anmeldetag: 05.03.2009
(51) Int. Cl.: B60R 22/46

(54) **GURTSTRAFFER**
SEAT BELT TENSIONER
PRÉTENDEUR DE CEINTURE

(30) Priorität: 25.03.2008 DE 102008015636
(43) Veröffentlichungstag der Anmeldung: 08.12.2010
(73) Patentinhaber: Autoliv Development AB, 447 83 Vårgårda (SE)
(72) Erfinder: RYDSMO, Erik, S-46695 Sollebrunn (SE)
(74) Vertreter: Müller Verweyen
(86) Internationale Anmeldenummer: PCT/EP2009/001556
(87) Internationale Veröffentlichungsnummer: WO 2009/118088

(56) Entgegenhaltungen:
- DE-A1- 10 039 364
- DE-A1- 10 346 967

## Beschreibung

Die Erfindung betrifft einen Gurtstraffer mit einer Gurtwelle, einer mit der Gurtwelle verbundenen Kraftbegrenzungseinrichtung und einem mit der Gurtwelle drehfest gekoppelten Strafferantriebsrad.

Gurtstraffer der eingangs genannten Art finden in Kraftfahrzeugen Verwendung und dienen dem Zweck, eventuell vorhandene Gurtlose zu Beginn eines Unfalles durch Aufwickeln des Sicherheitsgurtes zu beseitigen, und den Insassen möglichst früh an die Fahrzeugverzögerung anzukoppeln. Aufgrund der frühzeitigen Ankoppelung des Insassen wird die auf ihn einwirkende Belastung reduziert, indem diese auf einen möglichst langen Weg der Vorwärtsverlagerung verteilt wird. Damit der zur Verfügung stehende Weg der Vorwärtsverlagerung auch vollständig ausgenutzt werden kann, ist der Gurtstraffer ferner mit einer Kraftbegrenzungseinrichtung versehen, durch die ein kraftbegrenzter Gurtbandauszug ermöglicht ist. Die Insassenbelastung während der kraftbegrenzten Vorwärtsverlagerung wird durch die Auslegung der Kraftbegrenzungseinrichtung bestimmt, wobei durch Kombination mehrerer Kraftbegrenzungselemente in verschiedener Reihenfolge sich auch verschiedene Kraftbegrenzungsverläufe einstellen lassen.

Nachteilig bei solchen Systemen ist jedoch, dass aufgrund der aufeinanderfolgenden entgegengesetzten Drehbewegungen der Gurtwelle während des Gurtstraffens und der Kraftbegrenzung die sich an die Aufrollbewegung anschließende Gurtbandauszugsbewegung durch die noch anstehende von dem Gurtstraffer ausgeübte Straffkraft gestört werden kann. Diese nachteilige Kraftbegrenzungsstörung kann dadurch zu einer kurzzeitigen Spitze zu Beginn des Kraftbegrenzungsverlaufes führen. DE 103 46 967 A offerbart einen Gutstraffer gemäß den Oberbegriff des Anspruchs 1.

Aufgabe der Erfindung ist es, einen Gurtstraffer zu schaffen, bei dem das Strafferantriebsrad und die Gurtwelle nach erfolgter Straffbewegung zur Vermeidung der Kraftbegrenzerstörung möglichst schnell entkoppelt werden, wobei selbstverständlich die Strafflänge nicht verkürzt werden soll.

Die Aufgabe der Erfindung wird durch einen Gurtstraffer mit den Merkmalen des Anspruchs 1 gelöst, wobei vorteilhafte Weiterbildungen in den Unteransprüchen angegeben sind.

Erfindungsgemäß wird vorgeschlagen, dass ein Sicherungselement zur Ankopplung des Strafferantriebsrades an die Gurtwelle vorgesehen ist, und das Sicherungselement durch die Drehung der Gurtwelle in Gurtbandauszugsrichtung nach erfolgter Straffbewegung lösbar ist. Aufgrund des vorgeschlagenen Sicherungselementes werden das Strafferantriebsrad und die Gurtwelle zunächst drehfest miteinander gekoppelt, so dass die Straffbewegung möglichst verlustfrei auf die Gurtwelle übertragen wird. Das Lösen des Sicherungselementes erfolgt dann durch das Einsetzen der Gurtbandauszugsbewegung, so dass die Kraftbegrenzung eben nicht mehr durch die von dem Strafferantriebsrad auf die Gurtwelle ausgeübte Kraft gestört werden kann.

Damit die Entkoppelung von Strafferantriebsrad und Gurtwelle möglichst unmittelbar mit der einsetzenden Gurtbandauszugsbewegung erfolgt, wird vorgeschlagen, dass das Sicherungselement durch die Drehbewegung des Strafferantriebsrades aus der Sicherungsstellung in eine Bereitschaftsstellung versetzbar ist. In der Bereitschaftsstellung koppelt das Sicherungselement das Strafferantriebsrad gerade noch mit der Gurtwelle, befindet sich aber schon in einer Position, aus der das Lösen der Verbindung mit möglichst geringem Zeitverlust erfolgt.

Vorzugsweise wird das Lösen dann durch die einsetzende Gurtbandauszugsbewegung bewirkt, wobei hier der Vorteil ausgenutzt wird, dass die Gurtbandauszugsbewegung entgegen der Straffbewegung gerichtet ist, so dass ein irrtümliches Lösen des Sicherungselementes noch während der Straffbewegung ausgeschlossen werden kann.

Es wird weiter vorgeschlagen, dass das Strafferantriebsrad und die Gurtwelle über eine Rampenkontur miteinander gekoppelt sind, und die Lösebewegung des Sicherungselementes durch das Ausführen einer durch die Rampenkontur erzwungenen Axialbewegung des Strafferantriebsrades auslösbar ist. Hierbei kann die vorgeschlagene Rampenkontur sowohl zur Bewegung des Sicherungselementes aus der Sicherungsstellung in die Bereitschaftsstellung, als auch zum eigentlichen Lösen aus der Bereitschaftsstellung in die Freigabestellung genutzt werden. Dabei kann die Rampenkontur auch so ausgelegt werden, dass die bewusst erzwungene Axialbewegung nur bis zum Erreichen der Bereitschaftsstellung erfolgt, und anschließend eine Kraftübertragung in Umfangsrichtung möglich ist, um die eigentliche Straffbewegung zu übertragen.

Es wird weiter vorgeschlagen, dass an dem Gurtstraffergehäuse eine Klemmfläche vorgesehen ist, an der das Sicherungselement durch Ausführen der Gurtbandauszugsbewegung festlegbar ist, und die Lösebewegung des Sicherungselementes von der Gurtwelle und/oder dem Strafferantriebsrad durch das Festlegen bewirkt wird.

Es wird weiter vorgeschlagen, dass das Sicherungselement durch eine mit der Gurtwelle verkeilte Federscheibe gebildet ist. Die vorgeschlagene Federscheibe kann als kostengünstiges Stanzteil hergestellt werden. Außerdem erfüllt die Federscheibe bei entsprechender Wahl des Federstahles die mechanischen Werkstoffanforderungen hinsichtlich der Kraftaufnahme während des Straffprozesses als auch während des Umsteuerns aus der Aufrollbewegung in die Gurtbandauszugsbewegung. Ferner ermöglicht die Wahl des Federstahles, dass das Sicherungselement in der Bereitschaftsstellung durch das Strafferantriebsrad federvorgespannt ist, so dass das Sicherungselement nach dem Ausführen der Drehbewegung zu Beginn der Kraftbegrenzung sich selbsttätig in die Freigabestellung bewegt.

Die Federscheibe kann eine Bohrung mit einer Innenverzahnung aufweisen und auf einen mit einer Außenverzahnung versehenen Absatz der Gurtwelle aufschiebbar sein, wobei die aufgeschobene Federscheibe durch Verdrehen und Verkeilen auf der Gurtwelle festlegbar ist. Damit wird die Federscheibe bewusst durch eine gerichtete Drehbewegung verkeilt, welche in umgekehrter Richtung durch die einsetzende Gurtbandauszugsbewegung der Gurtwelle zum Lösen der Federscheibe genutzt wird.

Damit die einsetzende Gurtbandauszugsbewegung unmittelbar in eine Lösebewegung der Federscheibe umgewandelt wird, ist an dem Strafferantriebsrad ein Anschlag vorgesehen, an dem die Federscheibe anliegt. Der Anschlag dient während der Montage der Federscheibe als Begrenzung der zum Verkeilen notwendigen Drehbewegung. Da das Strafferantriebsrad während des Umsteuerns aus der Gurtaufrollbewegung in die Gurtbandauszugsbewegung der Gurtwelle mit der gerade noch anstehenden Straffkraft in Aufrollrichtung beaufschlagt ist, kann der Anschlag ferner als quasi feststehende Anlagefläche für die mit der Gurtwelle verbundene Federscheibe genutzt werden. Die Federscheibe ist dadurch zusätzlich gegenüber dem Strafferantriebsrad festgelegt.

Es wird ferner vorgeschlagen, dass das Strafferantriebsrad an seiner der Gurtwelle abgewandten Stirnseite einen Konus aufweist, an dem die Federscheibe anliegt und die Federscheibe durch Ausführen einer Axialbewegung des Strafferantriebsrades eine Schwenkbewegung ausführt und sich dadurch an dem Gurtstraffergehäuse festlegt. Der vorgeschlagene Konus ermöglicht eine linien- oder punktförmige Anlage der Federscheibe und erzeugt bei einer Axialbewegung des Strafferantriebsrades die erforderliche Schwenkbewegung der Federscheibe zur Aufbringung der Klemmkraft.

Die Schwenkbewegung wird weiter vereinfacht, indem die Federscheibe an ihrem Außenumfang beabstandete Federarme aufweist und mit den Federarmen an dem Konus anliegt. Aufgrund der beabstandeten Federarme wird erstens die Federsteifigkeit bewusst verringert, so dass die Schwenkbewegung sicher ausgeführt wird und ferner die Federarme während der Schwenkbewegung eine aufeinander zu gerichtete Fächerbewegung ausführen können.

Eine weitere bevorzugte Ausführung der Erfindung besteht darin, dass die Federarme in Axialrichtung von der Federscheibe abragen und beim Ausführen der Axialbewegung des Strafferantriebsrades eine einwärts gerichtete Schwenkbewegung ausführen, wodurch sich die Federarme zusammenziehen und die erforderliche Klemmkraft auf konstruktiv einfache Art und Weise erzeugt werden kann.

Eine weitere bevorzugte Ausführung der Erfindung besteht darin, dass die Federarme im Querschnitt wenigstens abschnittsweise eine schräggerichtete Ratschenkontur bilden, und die Klemmfläche des Gurtstraffergehäuses eine Gegenkontur aufweist, welche eine Relativdrehung der Federscheibe zu der Klemmfläche in eine Richtung zulässt und bei einer Relativdrehung der Federscheibe zu der Klemmfläche in die andere Richtung die Federscheibe festlegt. Damit kann das Federelement bereits während des Straffens in die Stellung gebracht werden, in der es bei der Umkehr der Drehrichtung der Gurtwelle ohne eine weitere Zustellbewegung gegenüber dem Gurtstraffergehäuse festgelegt ist.

Ferner wird vorgeschlagen, dass die Federarme der Federscheibe eine die Einbaulage definierende mechanische Codierung aufweisen, so dass ein Fehleinbau verhindert und ein automatisierter Fertigungsprozess ermöglicht ist.

Die Ankoppelung des Strafferantriebsrades an die Gurtwelle kann weiter verbessert werden, indem zwischen der Gurtwelle und dem Strafferantriebsrad ein Blockierelement vorgesehen ist, und das Blockierelement durch das Sicherungselement in der blockierten Stellung gesichert ist.

Das Sicherungselement kann zum Beispiel durch ein Band gebildet sein, wobei ein erstes Ende des Bandes das Blockierelement in der blockierten Stellung sichert, und das zweite Ende durch Ausführen der Gurtauszugsbewegung gegenüber dem Gurtstraffergehäuse festlegbar ist.

Eine einfache Art der Festlegung des Bandes besteht darin, indem das zweite Ende durch Umschlingen einer an dem Gurtstraffergehäuse angeordneten Klemmfläche festlegbar ist. Damit wird die von der Gurtwelle ausgeführte Drehbewegung auch als zur Festlegung des Bandes erforderliche Umschlingungsbewegung des Bandes um die feststehende Klemmfläche genutzt.

Nachfolgend wird die Erfindung anhand eines bevorzugten Ausführungsbeispieles näher erläutert. In den Figuren ist im Einzelnen zu erkennen:
Fig.1a-1e: Gurtstraffer mit Federscheibe vor der Aktivierung des Strafferantriebes
Fig.2a-2e: Gurtstraffer mit Federscheibe mit aktiviertem Strafferantrieb
Fig.3a-3e: Gurtstraffer mit Federscheibe bei einsetzender Kraftbegrenzung mit angekoppeltem Strafferantriebsrad
Fig.4a-4e: Gurtstraffer mit Federscheibe während der Kraftbegrenzung mit entkoppeltem Strafferantriebsrad
Fig.5a-5b: Gurtstraffer mit Blockierelement zwischen Strafferantriebsrad und Gurtwelle und Band zur Sicherung des Blockierelementes
Fig.6a-6d: Gurtstraffer mit Blockierelement zwischen Strafferantriebsrad und Gurtwelle und Band zur Sicherung des Blockierelementes mit Darstellung der Lösebewegung

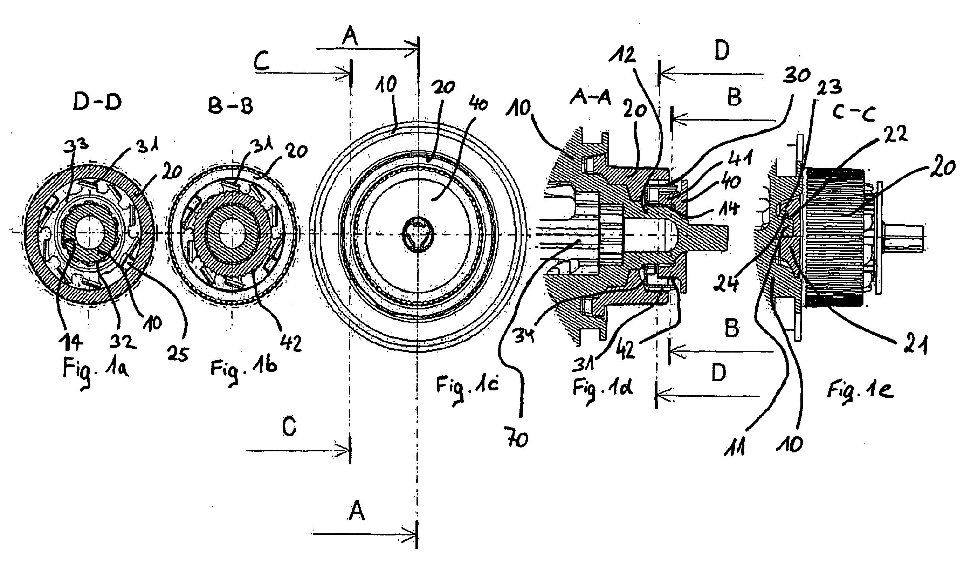

In den Fig.1a-1e ist ein erfindungsgemäß ausgebildeter Gurtstraffer mit einer Gurtwelle 10, einem die Gurtwelle 10 während des Straffprozesses in Aufwickelrichtung antreibenden Strafferantriebsrad 20 im Zustand vor Beginn des Straffprozesses zu erkennen. Ferner ist ein gurtwellenfestes Ende eines als Kraftbegrenzungseinrichtung wirkenden Torsionsstabs 70 zu erkennen, der im Anschluss an den Straffprozess einen kraftbegrenzten Gurtbandauszug ermöglicht. Im Sinne der Übersichtlichkeit ist im Folgenden nur der Teil des Gurtstraffers dargestellt und beschrieben, der die Ankoppelung des Strafferantriebsrades 20 an die Gurtwelle 10 betrifft. In der Fig.1c ist der Gurtstraffer von der Stirnseite zu erkennen, wobei insbesondere ein Ausschnitt des feststehenden Gurtstraffergehäuses 40, in diesem Fall ein Teil der Federkassette, und die konzentrisch zueinander angeordnete Gurtwelle 10 und das Strafferantriebsrad 20 zu erkennen sind. Die Ansicht der Schnittrichtungen C-C und A-A sind in den Fig.1e und 1d dargestellt. Das Strafferantriebsrad 20 ist seitlich an der Gurtwelle 10 angeordnet und mit dieser über eine Rampenkontur 21 verbunden. Die Gurtwelle 10 weist einen Zahn 11 auf, der in den Grund der Rampenkontur 21 hineinragt und umfangsseitig an einer Schräge 22 anliegt. Ferner ist die Gurtwelle 10 mit einem Absatz 12 versehen, auf dem ein als Sicherungselement wirkendes Federelement 30 vorgesehen ist. Auf dem Absatz 12 ist eine Verzahnung 14 angeordnet, auf die das Federelement 30 mit einer Bohrung und einer darin angeordneten Innenverzahnung 32 aufschiebbar ist. Das Federelement 30 selbst ist gebildet aus einer sich radial erstreckenden Federscheibe 34 und axial vom äußeren Rand der Federscheibe 34 abragenden Federarmen 31. Die Federarme 31 umfassen einen Flansch 41 des feststehenden Gurtstraffergehäuses 40, in diesem Fall der Federkassette. Die Federarme 31 weisen ferner eine Fehlstelle 33 auf, welche eine mechanische Codierung darstellen. Aufgrund der mechanischen Codierung kann das Federelement 30 nur in der Position, in der die Fehlstelle 33 sich mit einem von dem Strafferantriebsrad 20 nach innen abragenden Anschlag 25 überdeckt, mit der Innenverzahnung 32 auf die Verzahnung 14 der Gurtwelle 10 aufgeschoben werden. Anschließend wird das Federelement 30 unter zu Hilfenahme eines entsprechenden Werkzeuges in die in Fig.1a dargestellte Position im Uhrzeigersinn verdreht, bis der Anschlag 25 an einem der Federarme 31 zur Anlage gelangt. Damit das Federelement 30 gegenüber der Gurtwelle 10 verdreht werden kann, ist es wichtig, dass der Werkstoff des Federelementes 30 härter als der der Gurtwelle ist. Das Federelement 30 ist dazu bevorzugt aus Federstahl ausgebildet, während die Gurtwelle z.B. aus einem Aluminiumguss hergestellt ist. In der so hergestellten Sicherungsstellung liegt das Federelement 30 mit der durch den Übergang von Federscheibe 34 und Federarmen 31 gebildeten Knickstelle an einem Konus 27 des Strafferantriebsrades 20 an und presst dieses dadurch gegen die Gurtwelle 10 in die in Fig.1e gezeigte Stellung.

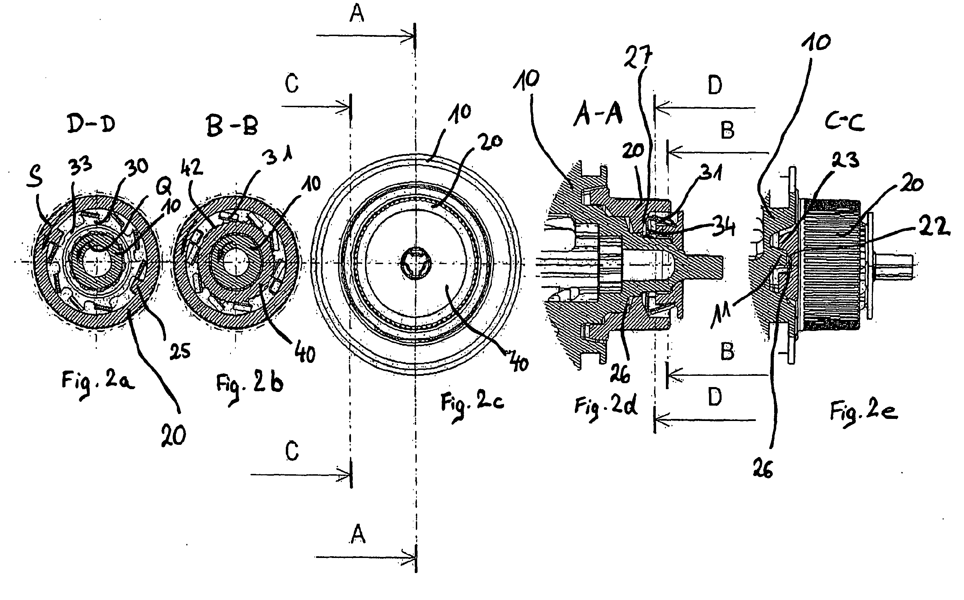

Mit Beginn der Straffbewegung wird das Strafferantriebsrad 20 in Pfeilrichtung "S" in Drehung versetzt und treibt dabei die Gurtwelle 10 in Aufrollrichtung "Q" an. Die Stellung der Einzelteile zueinander in dieser Phase ist in den Fig.2a-2e dargestellt. Aufgrund der Drehung des Strafferantriebsrades 20 und der damit verbundenen Drehmomentübertragung auf die Gurtwelle 10 hat sich das Strafferantriebsrad 20 mit der Schräge 22 an dem Zahn 11 der Gurtwelle 10 abgedrückt und dabei eine geringfügige Bewegung in Axialrichtung vollzogen, so dass zwischen der Gurtwelle 10 und dem Strafferantriebsrad 20 ein Spalt 26 entstanden ist. Ferner hat das Strafferantriebsrad 20 das Federelement 30 über den Konus 27 in Axialrichtung belastet, so dass die Federarme 31 eine einwärts gerichtete Schwenkbewegung in die dargestellte Bereitschaftsstellung ausführen. Zu diesem Zeitpunkt ist das Federelement 30 wegen der Verkeilung der Verzahnungen 14 und 32 noch fest auf dem Absatz 12 gehalten, so dass das Strafferantriebsrad 20 das Federelement 30 nicht verschieben kann. Die Federarme 31 sind im Querschnitt schräg ausgebildet und ratschen aufgrund Drehrichtung "Q" der Gurtwelle 10 in Aufrollrichtung über einen feststehenden Flansch 41 mit einer darauf angeordneten Verzahnung 42 des Gurtstraffergehäuses 40. Die Übertragung der Umfangskraft während des Straffvorganges von dem Strafferantriebsrad 20 auf die Gurtwelle 10 erfolgt von dem Zahn 23 auf den Zahn 11, die in dieser Stellung mit Flächen aneinander anliegen, die gerade oder nur geringfügig schräg ausgebildet sind, damit die Umfangskraft möglichst verlustfrei übertragen wird, und keine unnötig hohen Axialkräfte entstehen, die zu einem Lösen des Federelementes 30 führen könnten. Es versteht sich von selbst, dass zur Übertragung auch mehrere Zahnpaarungen vorgesehen sein können.

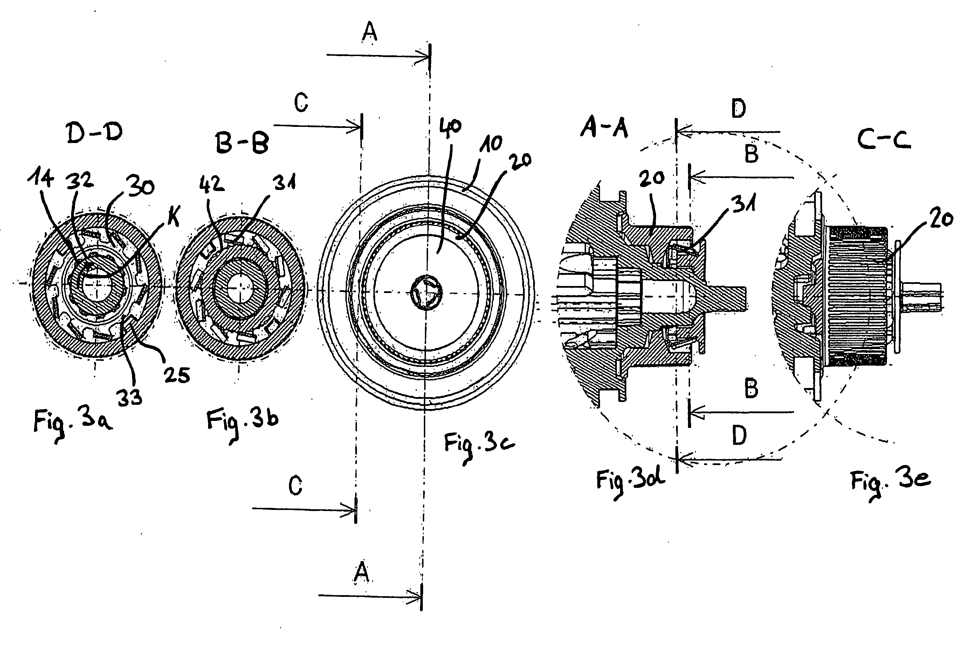

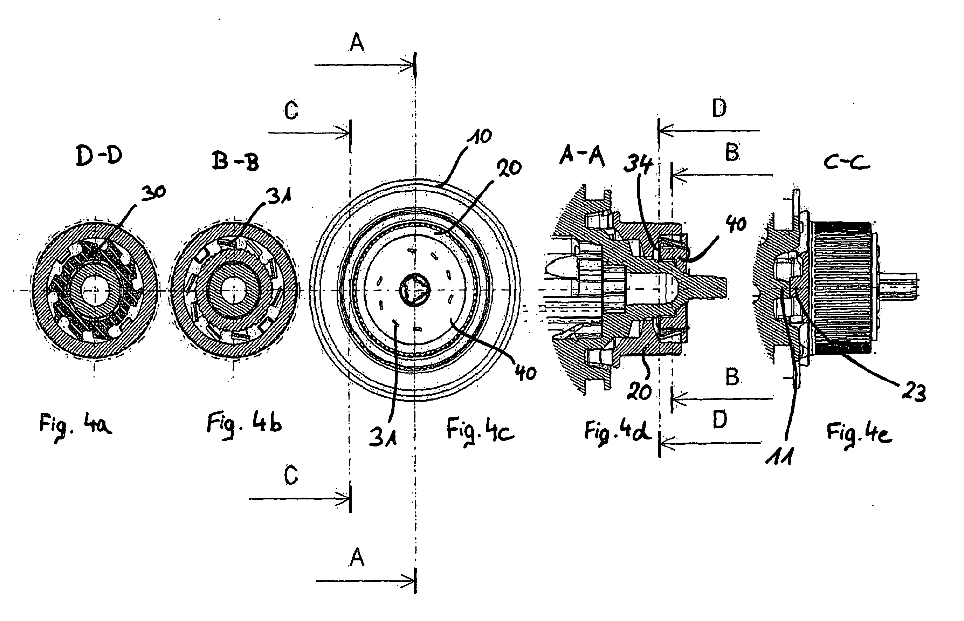

Mit dem Beginn der Kraftbegrenzung steht das Strafferantriebsrad 20 und die Drehrichtung der Gurtwelle 10 kehrt sich in die Gurtauszugsrichtung "K" um, wie in den Fig.3a-3e dargstellt ist. Dabei wird das Federelement 30 über die sich in der Verzahnung 42 auf dem Flansch 41 festlegenden schräggerichteten Federarme 31 gegenüber dem Gurtstraffergehäuse 40 festgelegt. Die Gurtwelle 10 führt dabei eine geringfügige der Verkeilbewegung während des Montageprozesses entgegen gerichtete Relativdrehung gegenüber dem Federelement 30 aus, bis die Verzahnungen 14 und 32 wieder entkeilt sind. Die Auslösung der Relativdrehung von Federelement 30 und Gurtwelle 10 kann ferner dadurch unterstützt werden, indem das Federelement 30 mit einem der Federarme 31 an dem Anschlag 25 anliegt, welcher durch die gerade noch anstehende Straffkraft festgelegt ist. Sobald das Federelement 30 die in Fig.3a gezeigte Stellung erreicht hat, in der die Fehlstelle 33 unter dem Anschlag 25 zu liegen kommt, wird das Federelement 30 aus der Bereitschaftsstellung aufgrund der oben beschriebenen Federvorspannung axial in die in Fig.4d gezeigte Stellung verschoben. Das Federelement 30 ist in dieser Stellung nicht mehr mit der Gurtwelle 10 verbunden und hat mit den Federarmen 32 das Gurtstraffergehäuse 40 durchstoßen. Das Strafferantriebsrad 20 vollzieht dabei ebenfalls eine axial gerichtete Bewegung bis zum Erreichen der Stellung in Fig.4e, in der sich das Strafferantriebsrad 20 nicht mehr im Eingriff mit der Gurtwelle 10 befindet und somit abgekoppelt ist.

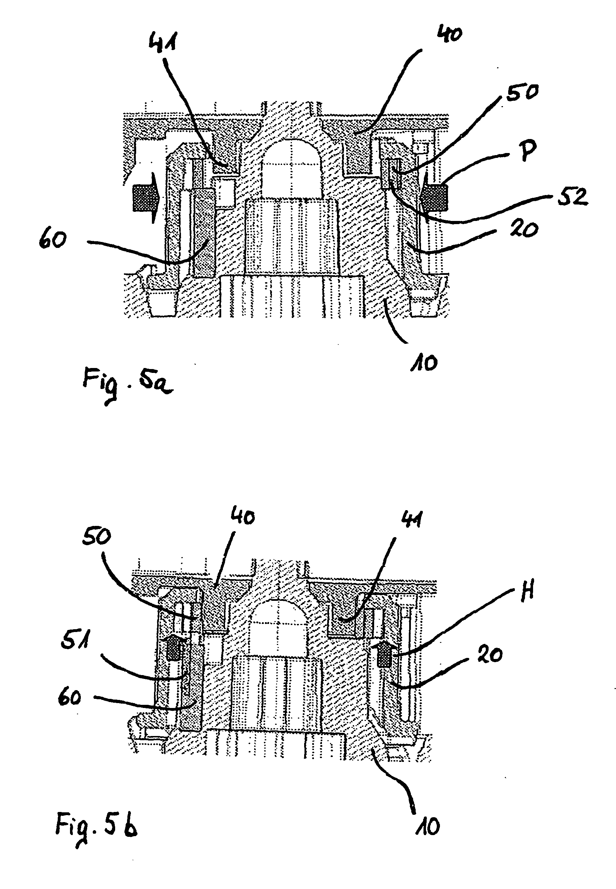

In den Fig.5a und Fig.5b ist ein weiteres Ausführungsbeispiel gezeigt, bei dem das Strafferantriebsrad 20 über ein Blockierelement 60 mit der Gurtwelle 10 gekoppelt ist. Das Blockierelement 60 wird über ein als Bandelement 50 ausgebildetes Sicherungselement in der blockierten Stellung gesichert. Die blockierte Stellung ist in der Fig.5a dargestellt. In der gesicherten Stellung umschlingt das Bandelement 50 mit einem Wickelabschnitt 52 die Gurtwelle 10 und sichert das Blockierelement 60 mit einem Ende 51. Zum Lösen des Bandelementes 50 führt das Strafferantriebsrad 20 mit Beginn des Straffvorganges eine Axialbewegung in Pfeilrichtung "H" aus, wobei der Wickelabschnitt 52 in eine Bereitschaftsstellung verschoben wird, in der dieser einen feststehenden Flansch 41 des Gurtstraffergehäuses umschlingt. Mit dem Einsetzen der Kraftbegrenzung dreht die Gurtwelle in Gurtbandauszugsrichtung, wobei das Ende 51 mitgezogen wird und den Wickelabschnitt 52 durch die Umschlingung auf dem Flansch 41 festlegt. Durch die Festlegung des Wickelabschnittes auf dem Flansch 41 wird schließlich das Ende 51 festgehalten, und das Blockierelement 60 wird selbsttätig gelöst.

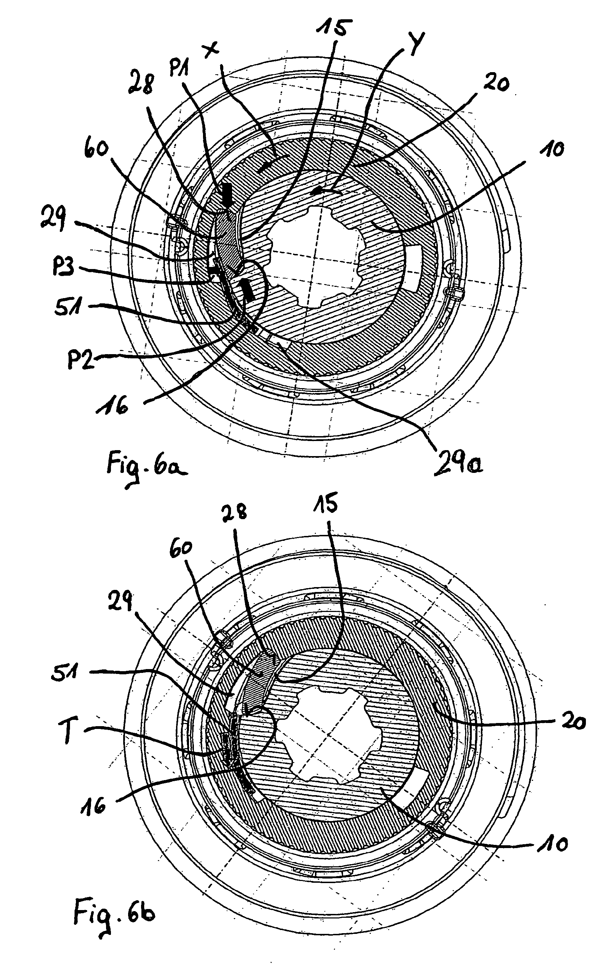

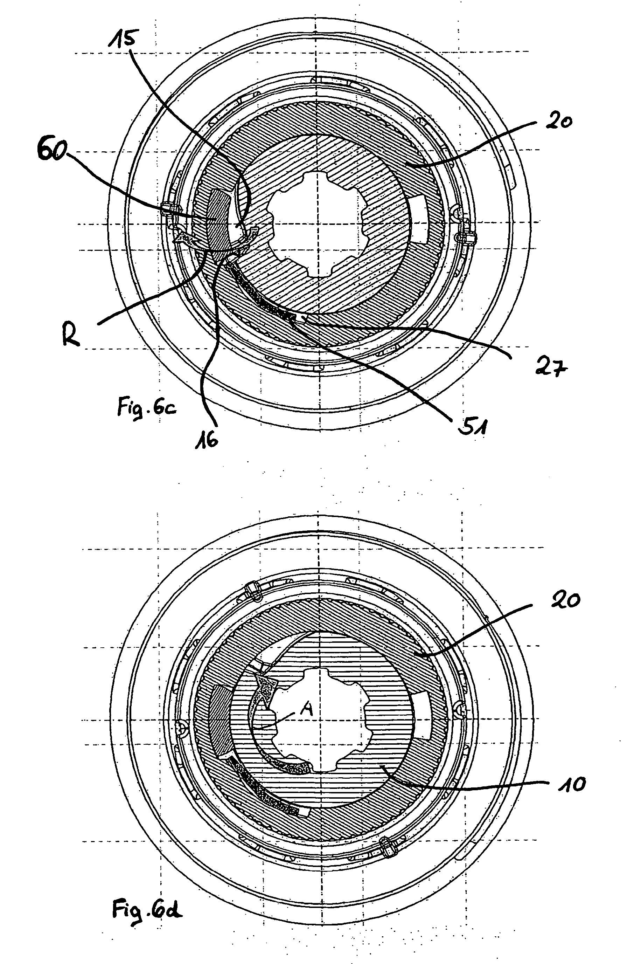

In den Fig.6a-6d ist das Zusammenwirken der Einzelteile während des Entkoppelungsvorganges im Querschnitt zu erkennen. Ausgehend von der Fig.6a befindet sich der Gurtstraffer zunächst in der Stellung, in der das Strafferantriebsrad 20 die Gurtwelle 10 in Pfeilrichtung "Y" antreibt und sich dabei selbst in Pfeilrichtung "X" dreht. Zwischen dem Strafferantriebsrad 20 und der Gurtwelle 10 ist ein Blockierelement 60 vorgesehen, welches in eine Ausnehmung 29 am Strafferantriebsrad 20 und eine Ausnehmung 15 an der Gurtwelle 10 eingreift. Das Antriebsmoment des Strafferantriebsrades 20 wird dabei über die Anpressfläche 28 und die Anpressfläche 16 auf die Gurtwelle 10 übertragen, wobei auf die Anpressflächen 28 und 16 jeweils die Druckkräfte P1 und P2 ausgeübt werden. Ferner ist ein Ende 51 des als Sicherungselement wirkenden Bandelementes 50 zu erkennen, welches das Blockierelement 60 unter Ausübung der Klemmkraft P3 in der dargestellten Kopplungsstellung sichert. Aufgrund der Festlegung des Wickelabschnittes 52 auf dem Flansch 41 wird das Ende 51 festgehalten und rutscht in Pfeilrichtung "T" in einen Freiraum 29a des Strafferantriebsrades 20. In der nunmehr nicht gesicherten Stellung schwenkt das Blockierelement 60 in Pfeilrichtung "R" in die Ausnehmung 29 und verlässt dabei die Ausnehmung 15 an der Gurtwelle 10. Die Schwenkbewegung kann dabei durch die einsetzende Drehung der Gurtwelle 10 während der Kraftbegrenzung in Pfeilrichtung "A" unterstützt werden, indem die Anpressfläche 16 als Schräge ausgebildet ist.

## Patentansprüche

1. Gurtstraffer mit einer Gurtwelle (10), einer mit der Gurtwelle (10) verbundenen Kraftbegrenzungseinrichtung (70) und einem mit der Gurtwelle (10) drehfest gekoppelten Strafferantriebsrad (20) wobei ein Sicherungselement (30,50) zur Ankopplung des Strafferan-triebsrades (20) an die Gurtwelle (10) vorgesehen ist, **dadurch gekennzeichnet, dass** das Sicherungselement (30,50) durch die Drehung der Gurtwelle (10) in Gurtbandauszugsrichtung nach erfolgter Straffbewegung lösbar ist.

2. Gurtstraffer nach einem der vorangegangenen Ansprüche, **dadurch gekennzeichnet, dass** das Sicherungselement (30,50) durch die Drehbewegung des Strafferantriebsrades (20) aus einer Sicherungsstellung in eine Bereitschaftsstellung versetzbar ist.

3. Gurtstraffer nach Anspruch 2, **dadurch gekennzeichnet, dass** das Sicherungselement (30,50) durch Ausführen der Gurtbandauszugsbewegung aus der Bereitschaftsstellung lösbar ist.

4. Gurtstraffer nach einem der vorangegangenen Ansprüche, **dadurch gekennzeichnet, dass** das Strafferantriebsrad (20) und die Gurtwelle (10) über eine Rampenkontur (21) miteinander gekoppelt sind, und die Lösebewegung des Sicherungselementes (30,50) durch das Ausführen einer durch die Rampenkontur (21) erzwungenen Axialbewegung des Strafferantriebsrades (20) auslösbar ist.

5. Gurtstraffer nach einem der vorangegangenen Ansprüche, **dadurch gekennzeichnet, dass** an dem Gurtstraffergehäuse (40) eine Klemmfläche (41) vorgesehen ist, an der das Sicherungselement (30,50) durch Ausführen der Gurtbandauszugsbewegung festlegbar ist, und die Lösebewegung des Sicherungselementes (30,50) von der Gurtwelle (10) und/oder dem Strafferantriebsrad (20) durch das Festlegen bewirkt wird.

6. Gurtstraffer nach einem der vorangegangenen Ansprüche, **dadurch gekennzeichnet, dass** das Sicherungselement (30) durch eine mit der Gurtwelle (10) verkeilte Federscheibe gebildet ist.

7. Gurtstraffer nach Anspruch 6, **dadurch gekennzeichnet, dass** die Federscheibe (30) eine Bohrung mit einer Innenverzahnung (32) aufweist und auf einen mit einer Außenverzahnung versehenen Absatz (12) der Gurtwelle (10) aufschiebbar ist, und die aufgeschobene Federscheibe durch Verdrehen und Verkeilen auf der Gurtwelle (10) festlegbar ist.

8. Gurtstraffer nach Anspruch 7, **dadurch gekennzeichnet, dass** an dem Strafferantriebsrad (20) ein den Drehwinkel der Federscheibe (30) begrenzender Anschlag (25) vorgesehen ist.

9. Gurtstraffer nach Anspruch 6 und einem der Ansprüche 7 oder 8, **dadurch gekennzeichnet, dass** das Strafferantriebsrad (20) an seiner der Gurtwelle (10) abgewandten Stirnseite einen Konus (27) aufweist, an dem die Federscheibe (30) anliegt, und die Federscheibe (30) durch Ausführen einer Axialbewegung des Strafferantriebsrades (20) eine Schwenkbewegung ausführt und sich **dadurch** an dem Gurtstraffergehäuse (40) festlegt.

10. Gurtstraffer nach Anspruch 9, **dadurch gekennzeichnet, dass** die Federscheibe (30) an ihrem Außenumfang beabstandete Federarme (31) aufweist und mit den Federarmen (31) an dem Konus (27) anliegt.

11. Gurtstraffer nach Anspruch 10, **dadurch gekennzeichnet, dass** die Federarme (31) in Axialrichtung von der Federscheibe (30) abragen und bei Ausführen der Axialbewegung des Strafferantriebsrades (20) eine einwärts gerichtete Schwenkbewegung ausführen.

12. Gurtstraffer nach Anspruch 10 oder 11, **dadurch gekennzeichnet, dass** die Federarme (31) im Querschnitt wenigstens abschnittsweise eine schräggerichtete Ratschenkontur bilden, und die Klemmfläche des Gurtstraffergehäuses (40) eine Gegenkontur (42) aufweist, welche eine Relativdrehung der Federscheibe (30) zu der Klemmfläche in eine Richtung zulässt und bei einer Relativdrehung der Federscheibe zu der Klemmfläche in die andere Richtung die Federscheibe (30) festlegt.

13. Gurtstraffer nach einem der Ansprüche 10 bis 12, **dadurch gekennzeichnet, dass** die Federarme (31) des Federelementes (30) eine die Einbaulage definierende mechanische Codierung aufweisen.

14. Gurtstraffer nach einem der Ansprüche 1 bis 5, **dadurch gekennzeichnet, dass** zwischen der Gurtwelle (10) und dem Strafferantriebsrad (20) ein Blockierelement (60) vorgesehen ist, und das Blockierelement (60) durch das Sicherungselement (50) in der blockierten Stellung gesichert ist.

15. Gurtstraffer nach Anspruch 14, **dadurch gekennzeichnet, dass** das Sicherungselement (50) durch ein Bandelement (50) gebildet ist, und ein erstes Ende (51) des Bandelementes (50) das Blockierelement (60) in der blockierten Stellung sichert, und ein zweites Ende (52) durch Ausführen der Gurtauszugsbewegung gegenüber dem Gurtstraffergehäuse (40) festlegbar ist.

16. Gurtstraffer nach Anspruch 14, **dadurch gekennzeichnet, dass** das zweite Ende (52) durch Umschlingen einer an dem Gurtstraffergehäuse (40) angeordneten Klemmfläche (41) festlegbar ist.

## Claims

1. Belt tensioner comprising a belt shaft (10), a load limiting device (70) connected with the belt shaft (10), and a tensioner drive wheel (20) coupled to the belt shaft (10) in a rotationally fixed manner, wherein a retaining element (30, 50) is provided for coupling the tensioner drive wheel (20) to the belt shaft (10), **characterized in that** the retaining element (30, 50) can be released via the rotation of the belt shaft (10) in the belt webbing extraction direction after the tensioning movement has taken place.

2. Belt tensioner according to any one of the preceding claims, **characterized in that** the retaining element (30, 50) can be displaced from a securing position to a ready position by the rotational movement of the tensioner drive wheel (20).

3. Belt tensioner according to claim 2, **characterized in that** the retaining element (30, 50) can be released from the ready position by the belt webbing extraction movement being performed.

4. Belt tensioner according to any one of the preceding claims, **characterized in that** the tensioner drive wheel (20) and the belt shaft (10) are coupled to each other via a ramp contour (21), and that the releasing movement of the retaining element (30, 50) can be initiated by an axial movement of the tensioner drive wheel (20) forced by the ramp contour (21) being performed.

5. Belt tensioner according to any one of the preceding claims, **characterized in that** a clamping surface (41) is provided on the belt tensioner housing (40), on which surface the retaining element (30, 50) can be fixed by the belt webbing extraction movement being performed, and that the movement releasing the retaining element (30, 50) from the belt shaft (10) and/or the tensioner drive wheel (20) is effected by the fixation.

6. Belt tensioner according to any one of the preceding claims, **characterized in that** the retaining element (30) is formed by a spring plate which is keyed with the belt shaft (10).

7. Belt tensioner according to claim 6, **characterized in that** the spring plate (30) comprises a bore with an inner toothing (32) and can be slid onto a shoulder (12) of the belt shaft (10) provided with an outer toothing, and that the slid-on spring plate can be fixed on the belt shaft (10) by being rotated and keyed.

8. Belt tensioner according to claim 7, **characterized in that** an abutment (25) limiting the rotation angle of the spring plate (30) is provided on the tensioner drive wheel (20).

9. Belt tensioner according to claim 6 and one of the claims 7 or 8, **characterized in that** the tensioner drive wheel (20) on its front end facing away from the belt shaft (10) comprises a taper (27), against which the spring plate (30) rests, and that the spring plate (30) performs a swivel motion by an axial movement of the tensioner drive wheel (20) being performed and thereby fixes itself on the belt tensioner housing (40).

10. Belt tensioner according to claim 9, **characterized in that** the spring plate (30) on its outer periphery comprises spaced spring arms (31) and with the spring arms (31) rests against the taper (27).

11. Belt tensioner according to claim 10, **characterized in that** the spring arms (31) project from the spring plate (30) in the axial direction and upon the axial movement of the tensioner drive wheel (20) being performed perform an inwardly directed swivel motion.

12. Belt tensioner according to claim 10 or 11, **characterized in that** the spring arms (31) at least in sections of their cross-section form an obliquely directed ratchet contour, and that the clamping surface of the belt tensioner housing (40) comprises a counter contour (42) which permits a relative rotation of the spring plate (30) to the clamping surface in one direction and fixes the spring plate (30) upon a relative rotation of the spring plate to the clamping surface in the other direction.

13. Belt tensioner according to one of the claims 10 to 12, **characterized in that** the spring arms (31) of the spring element (30) have a mechanical coding defining the installation position.

14. Belt tensioner according to one of the claims 1 to 5, **characterized in that** a locking element (60) is provided between the belt shaft (10) and the tensioner drive wheel (20), and that the locking element (60) is secured in the locked position by the retaining element (50).

15. Belt tensioner according to claim 14, **characterized in that** the retaining element (50) is formed by a band element (50), and that a first end (51) of the band element (50) secures the locking element (60) in the locked position, and that a second end (52) can be fixed in relation to the belt tensioner housing (40) by the belt extraction movement being performed.

16. Belt tensioner according to claim 14, **characterized in that** the second end (52) can be fixed by winding around a clamping surface (41) located on the belt tensioner housing (40).

## Revendications

1. Prétensionneur de ceinture comprenant un arbre d'enroulement de ceinture (10), un dispositif de limitation de force (70) relié à l'arbre d'enroulement de ceinture (10) et un pignon d'entraînement de prétensionneur (20) accouplé de façon rotationnellement fixe à l'arbre d'enroulement de ceinture (10), un élément d'arrêt (30, 50) permettant l'accouplement du pignon d'entraînement de prétensionneur (20) à l'arbre d'enroulement de ceinture (10) étant prévu, **caractérisé en ce que** l'élément d'arrêt (30, 50) peut être débloqué par la rotation de l'arbre d'enroulement de ceinture (10) dans le sens d'extraction de la sangle de ceinture une fois le mouvement de tension effectué.

2. Prétensionneur de ceinture selon l'une des revendications précédentes, **caractérisé en ce que** l'élément d'arrêt (30, 50) peut être amené d'une position d'arrêt dans une position de disponibilité par le mouvement de rotation du pignon d'entraînement de prétensionneur (20).

3. Prétensionneur de ceinture selon la revendication 2, **caractérisé en ce que** l'élément d'arrêt (30, 50) peut être libéré de la position de disponibilité par la réalisation du mouvement d'extraction de la sangle de ceinture.

4. Prétensionneur de ceinture selon l'une des revendications précédentes, **caractérisé en ce que** le pignon d'entraînement de prétensionneur (20) et l'arbre d'enroulement de ceinture (10) sont accouplés l'un avec l'autre par un contour en rampe (21), et le mouvement de déblocage de l'élément d'arrêt (30, 50) peut être déclenché par la réalisation d'un mouvement axial, imposé par le contour en rampe (21), du pignon d'entraînement de prétensionneur (20).

5. Prétensionneur de ceinture selon l'une des revendications précédentes, **caractérisé en ce que** le boîtier de prétensionneur de ceinture (40) présente une surface de serrage (41) à laquelle l'élément d'arrêt (30, 50) peut être fixé par la réalisation du mouvement d'extraction de la sangle de ceinture, et **en ce que** le mouvement de déblocage de l'élément d'arrêt (30, 50) de l'arbre d'enroulement de ceinture (10) et/ou du pignon d'entraînement de prétensionneur (20) est provoqué par la fixation.

6. Prétensionneur de ceinture selon l'une des revendications précédentes, **caractérisé en ce que** l'élément d'arrêt (30) est formé par une rondelle élastique calée avec l'arbre d'enroulement de ceinture (10).

7. Prétensionneur de ceinture selon la revendication 6, **caractérisé en ce que** la rondelle élastique (30) présente un trou doté d'une denture intérieure (32) et peut être enfilée sur un décrochement (12) de l'arbre d'enroulement de ceinture (10), pourvu d'une denture extérieure, et **en ce que** la rondelle élastique enfilée peut être fixée sur l'arbre d'enroulement de ceinture (10) par rotation et calage.

8. Prétensionneur de ceinture selon la revendication 7, **caractérisé en ce que** le pignon d'entraînement de prétensionneur (20) présente une butée (25) limitant l'angle de rotation de la rondelle élastique (30).

9. Prétensionneur de ceinture selon la revendication 6 et l'une des revendications 7 ou 8, **caractérisé en ce que** le pignon d'entraînement de prétensionneur (20) présente, sur sa face frontale opposée à l'arbre d'enroulement de ceinture (10), un cône (27) contre lequel s'applique la rondelle élastique (30), et **en ce que** la rondelle élastique (30) effectue un mouvement de pivotement par la réalisation d'un mouvement axial du pignon d'entraînement de prétensionneur (20) et se fixe de ce fait au boîtier de prétensionneur de ceinture (40).

10. Prétensionneur de ceinture selon la revendication 9, **caractérisé en ce que** la rondelle élastique (30) présente des bras élastiques (31) mutuellement distants sur sa périphérie extérieure et s'applique contre le cône (27) avec les bras élastiques (31).

11. Prétensionneur de ceinture selon la revendication 10, **caractérisé en ce que** les bras élastiques (31) font saillie de la rondelle élastique (30) dans le sens axial et, lors de la réalisation du mouvement axial du pignon d'entraînement de prétensionneur (20), effectuent un mouvement de pivotement dirigé vers l'intérieur.

12. Prétensionneur de ceinture selon la revendication 10 ou 11, **caractérisé en ce que** les bras élastiques (31) forment au moins par endroits, en vue en coupe transversale, un contour en rochet incliné, et **en ce que** la surface de serrage du boîtier de prétensionneur de ceinture (40) présente un contre-contour (42), lequel permet une rotation relative de la rondelle élastique (30) par rapport à la surface de serrage dans un sens et, dans le cas d'une rotation relative de la rondelle élastique par rapport à la surface de serrage dans l'autre sens, fixe la rondelle élastique (30).

13. Prétensionneur de ceinture selon l'une des revendications 10 à 12, **caractérisé en ce que** les bras élastiques (31) de l'élément élastique (30) présentent un codage mécanique définissant la position de montage.

14. Prétensionneur de ceinture selon l'une des revendications 1 à 5, **caractérisé en ce qu'**il est prévu un élément de blocage (60) entre l'arbre d'enroulement de ceinture (10) et le pignon d'entraînement de prétensionneur (20), et **en ce que** l'élément de blocage (60) est verrouillé en position bloquée par l'élément d'arrêt (50).

15. Prétensionneur de ceinture selon la revendication 14, **caractérisé en ce que** l'élément d'arrêt (50) est formé par un élément de bande (50), et **en ce qu'**une première extrémité (51) de l'élément de bande (50) bloque l'élément de blocage (60) en position bloquée, et une seconde extrémité (52) peut être fixée par la réalisation du mouvement d'extraction de ceinture par rapport au boîtier de prétensionneur de ceinture (40).

16. Prétensionneur de ceinture selon la revendication 14, **caractérisé en ce que** la seconde extrémité (52) peut être fixée par enroulement autour d'une surface de serrage (41) disposée sur le boîtier de prétensionneur de ceinture (40).
